# EUROPEAN PATENT SPECIFICATION

(11) **EP 0 587 310 B1**
(45) Date of publication and mention of the grant of the patent: **16.10.1996**
(21) Application number: 93306253.1
(22) Date of filing: 06.08.1993
(51) Int. Cl.: H02G 3/06

(54) **Cable gland**
Kabelverschraubung
Presse-étoupe

(30) Priority: 11.08.1992 GB 9217018
(43) Date of publication of application: 16.03.1994
(73) Proprietor: HAWKE CABLE GLANDS LIMITED, Walsall Staffordshire WS9 8DS (GB)
(72) Inventor: Hand, Edward, Stalybridge, Cheshire, SK15 2QU (GB)
(74) Representative: Knowles, Audrey Elizabeth

(56) References cited:
- EP-A- 0 144 146
- DE-A- 3 028 800

## Description

This invention relates to cable glands.

The invention has particular application to cable glands of the type adapted to clamp an armour portion of an electric cable to which the gland is fitted for connecting the cable to an electrical fitting, equipment or the like.

As used herein the term "armour" includes one or more reinforcing layers of metal, plastics, textile or other suitable material which may be woven, for example a braid, or non-woven, for example a tape, strip, wire or strand.

It is already known to provide glands for armour cable in which the armour portion is clamped between opposed axially extending tapered surfaces when the gland is assembled.

A problem with many of the known glands of this type is that the annular gap between the tapered surfaces is fixed so that only one thickness of armour portion can be accommodated. As a result, a range of glands having different annular gaps is required for matching different armour thicknesses to meet all possible requirements of the user. Providing and maintaining stocks of a large number of different cable glands is costly for both the manufacturer and wholesaler. Also, there is a risk of the user selecting and fitting the wrong size cable gland.

It has therefore been proposed to use an insert or a pair of inserts separate from the threadably engaged gland members for one or both of the tapered surfaces and to provide a range of different sizes to accommodate different armour thicknesses.

This enables common gland members to be adapted for different armour thicknesses by selection and fitment of the appropriate size of insert or insert pair. It still however requires the manufacturer and wholesaler to provide and maintain stocks of a large number of accurately sized inserts or insert pairs for each different armour thickness to meet all possible requirements of the user. In addition, it does not prevent the user selecting and fitting the wrong size insert or insert pair.

A cable gland is known from EP-A-0144146 in which the cable armour is clamped between first and second pairs of opposed tapered surfaces that are oppositely inclined to form a kink in the armour to prevent the armour being pulled out of the gland. The gap between the opposed tapered surfaces is of constant width in the assembled gland.

The present invention has been made from a consideration of the foregoing problems and disadvantages of known cable glands.

According to the present invention a cable gland for electrical cable comprises a pair of members having opposed tapered surfaces for clamping cable armour therebetween, wherein one of the clamping members has first and second tapered surfaces characterised in that the tapered surface of the other clamping member is co-operable with a selected one of the first and second tapered surfaces for accommodating different thicknesses of cable armour.

By this invention, the same cable gland can accommodate different armour thicknesses by assembling the gland with either the first or second tapered surface of said one clamping member opposite the tapered surface of said other clamping member thereby reducing the number of clamping members required to meet all requirements of the user.

Advantageously, the first and second tapered surfaces extend towards opposite ends of said one clamping member, and said one clamping member is reversible to position either the first or second tapered surface opposite the tapered surface of said other member.

Preferably, the clamping members are relatively axially adjustable to vary the size of an annular gap between the opposed tapered surfaces within specific limits. In this way, the gland automatically adapts to different thicknesses of cable armour within specific limits and the user only has to ensure that the cable armour thickness is within the range of specific limits thereby avoiding accurate matching of the gland to the cable armour thickness.

Conveniently, the opposed tapered surfaces extend substantially parallel to each other for all adjusted positions of the clamping members, and the first and second tapered surfaces are optionally of different axial length. In this way, reversing said one member alters the range of cable armour thicknesses that can be accommodated by axial adjustment of the clamping members.

Advantageously, the tapered surface of said other member is axially elongated relative to the first and/or second tapered surfaces of said one member. In this way, the clamping area between the opposed tapered surfaces can be maintained substantially constant for all adjusted positions of the clamping members thereby ensuring the same clamping force is obtained for different armour thicknesses.

Conveniently, the clamping members are urged axially to clamp the cable armour between the opposed tapered surfaces by relative rotation of two threadably engaged parts of the gland.

Preferably, the first and second tapered surfaces are provided by internal surfaces of an annular ring that is separate from said threadably engaged gland members. The opposed tapered surface may be provided by an external surface of an annular cone that is separate from said threadably engaged gland members or integral with one of said threadably engaged gland members.

Preferably, a set of rings of different sizes is provided for selective assembly with a common cone.

Other features, benefits and advantages of the invention will be apparent from the following description of an exemplary embodiment with reference to the accompanying drawings wherein:-
FIGURE 1 is a longitudinal section of a cable gland embodying the invention fitted to an armour cable showing the outer clamping ring in one position;
FIGURE 2 is a longitudinal section, similar to Figure 1, showing the clamping members in an axially adjusted position;
FIGURE 3 is a longitudinal section, similar to Figure 1, showing the outer clamping ring in an alternative reversed position; and
FIGURE 4 is a longitudinal section, similar to Figure 3, showing the clamping members in an axially adjusted position.

In the exemplary embodiment depicted in the drawings, the electric cable 1 has an armour portion 2 disposed between an outer sheath 3 of electrically insulating material and an inner sheath 4 of electrically insulating material surrounding one or more electrical conductors (not shown).

The gland 5 essentially comprises an entry adaptor 6, a sleeve 7 and a cap nut 8 defining a central passageway for the cable 1 with internal annular seals 9 and 10 engageable respectively with the inner sheath 4 and outer sheath 3, and a pair of internal clamping members 11,12 for gripping the armour portion 2.

One end of the entry adaptor 6 has a cylindrical bore 13 sized to fit with radial clearance over the inner sheath 4 and an external thread 14 for engagement with a complementary threaded hole (not shown) in an electrical fitting to which the cable 1 is to be connected. Alternatively, the thread 14 may extend through the hole for engagement by a retaining nut.

The other end of the entry adaptor 6 has a coaxial counterbore 15 terminating in an internal shoulder 16 against which the seal 9 seats, and an external thread 17 engaged by a complementary threaded counterbore 18 at one end of the sleeve 7.

Between the external threads 14,17 the entry adaptor 6 has a hexagonal flange 19 for engagement by a spanner or like tool to rotate the entry adaptor 6 for assembly and installation of the gland.

A first or inner clamping member 11 is constituted by a ferrule 11 having a cylindrical bore 20 sized to fit with radial clearance over the inner sheath 4. One end of the ferrule 11 has a cylindrical external surface 21 that is a close tolerance fit in the counterbore 15 in the entry adaptor 6. The inner end of the ferrule 11 bears against the seal 9 to compress the seal 9 axially and radially to bear tightly on the inner sheath 4.

An external flange 22 intermediate the ends of the ferrule 11 is engageable with the end of the entry adaptor 6 to axially locate the ferrule 11 and prevent over compression of the seal 9.

The other end of the ferrule 11 projects from the entry adaptor 6 and has an external clamping surface 23 of frusto-conical shape tapering from the flange 22 to the outer end of the ferrule 11.

A second or outer clamping member 12 is constituted by an annular ring 12 having a cylindrical external surface 24 that is a close tolerance fit in the counterbore 18 in the sleeve 7.

The ring 12 seats against an internal abutment shoulder 25 intermediate the ends of the sleeve 7 and has two internal clamping surfaces 26a,26b of frusto-conical shape complementary to the external clamping surface 23 on the ferrule 11.

The clamping surfaces 26a,26b extend to opposite ends of the ring 12 such that the ring 12 is reversible to position either one of the clamping surfaces 26a,26b opposite the clamping surface 23 on the ferrule 11.

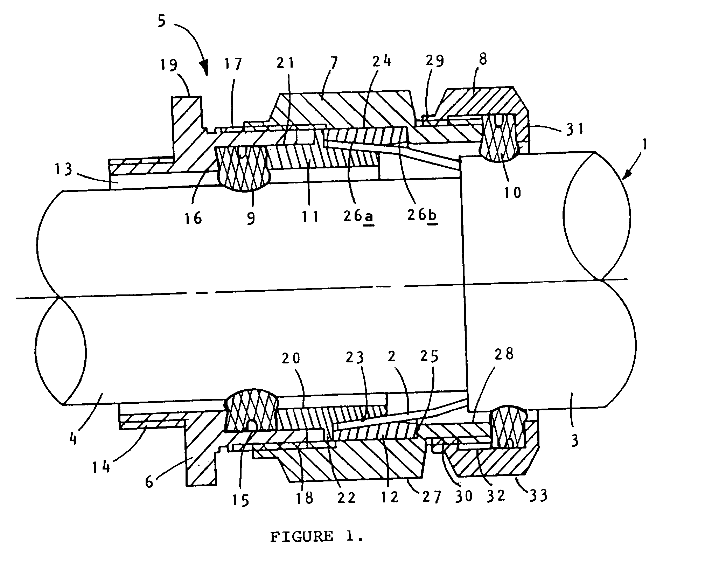

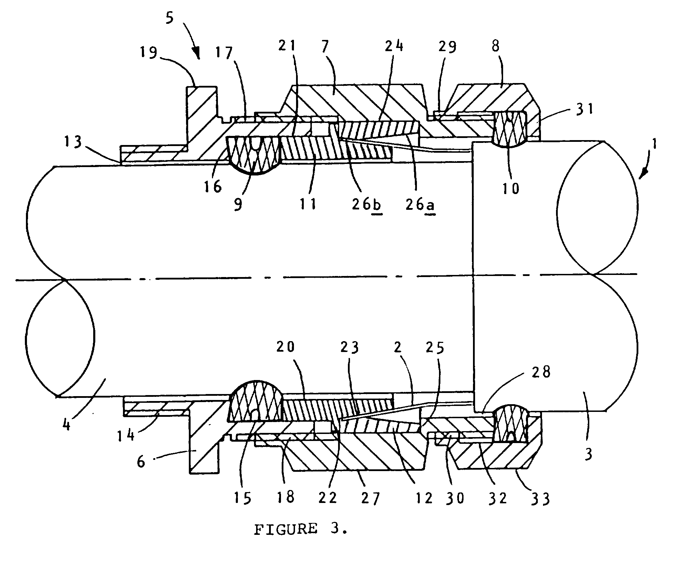

The ferrule clamping surface 23 extends substantially parallel to the opposed clamping surface 26a or 26b in each orientation of the ring 12 and the clamping surfaces 26a,26b are of different axial length to vary the size of an annular clearance gap between the opposed clamping surfaces 23,26a or 23,26b to accommodate different minimum thicknesses of armour portion 2 as shown in Figures 1 and 3.

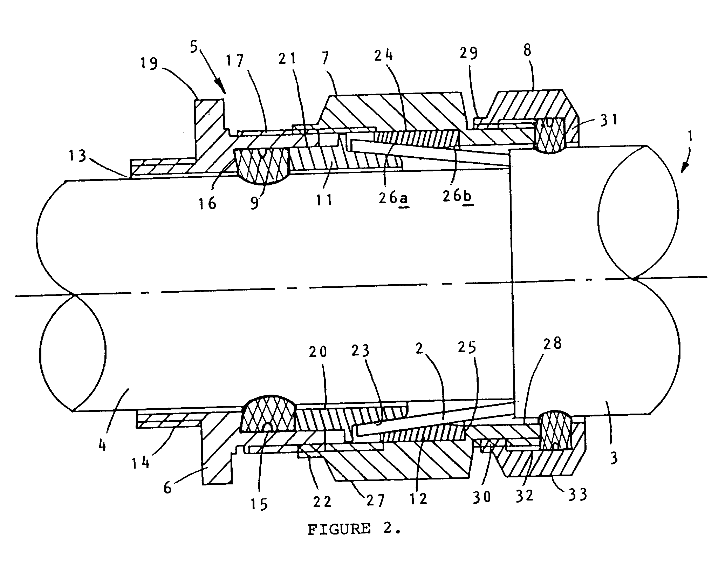

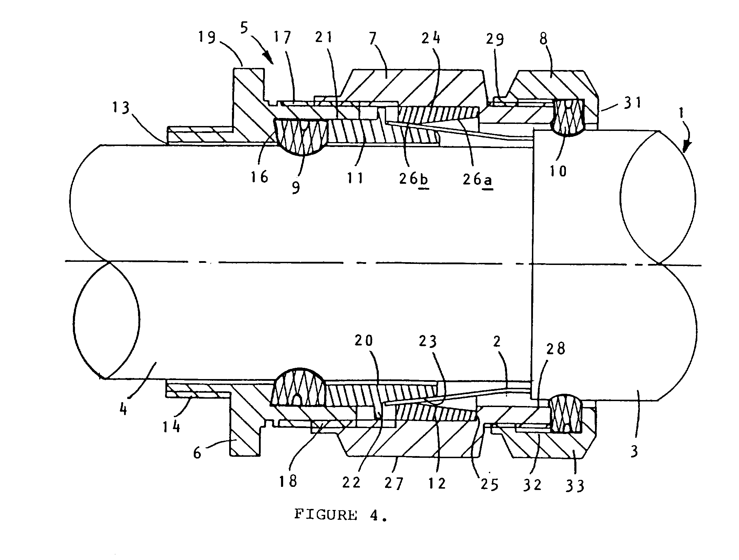

In addition, the ring 12 is axially adjustable relative to the ferrule 11 to adjust the size of the annular clearance gap within specific limits in each orientation of the ring 12 relative to the ferrule 11 as shown in Figures 2 and 4.

For example, in a 50mm cable gland, armour portions having a thickness of from 0.2mm to 1.8mm can be accommodated between the clamping surfaces 26b and 23, and armour portions having a thickness of from 1.8mm to 2.5mm can be accommodated between the clamping surfaces 26a and 23. In this way, one pair of clamping members replaces several pairs of clamping members required to accommodate the same range of armour thicknesses in a conventional gland of equivalent size. It will be appreciated that the axial length and/or diameter of the clamping surfaces on the ring and/or ferrule can be chosen to provide any desired range of adjustment of the clearance gap.

As shown, the clamping surface 23 is of similar axial length to the clamping surface 26a and is axially elongated relative to the clamping surface 26b. As a result, a variable clamping area is obtained between the surfaces 23,26a as shown in Figures 1 and 2 and a constant clamping area is obtained between the surfaces 23,26b as shown in Figures 3 and 4 for axial adjustment of the ring 12 relative to the ferrule 11.

The sleeve 7 has a hexagonal body portion 27 for engagement by a spanner or like tool for rotating the sleeve 7 relative to the entry adaptor 6 during assembly and installation of the gland to adjust automatically the clamping members 11,12 to the thickness of the armour portion 2. The clamping surfaces 23,26 may be smooth or roughened, for example by knurling, to enhance the grip on the armour portion 2.

The other end of the sleeve 7 remote from the entry adaptor 6 has a cylindrical bore 28 sized to fit with radial clearance over the outer sheath 3 and an external thread 29 for engagement with a complementary internal thread 30 at one end of the cap nut 8.

The other end of the cap nut 8 has an internal annular lip 31 sized to fit with radial clearance over the outer sheath 3 and the seal 10 is seated in an annular recess 32 within the cap nut 8 against the lip 31.

The cap nut 8 has a hexagonal body portion 33 engageable by a spanner or like tool for rotating the cap nut 8 relative to the sleeve 7 during assembly and installation of the gland causing the end of the sleeve 7 to bear against the seal 10 to compress the seal 10 axially and radially to bear tightly on the outer sheath 3.

Both seals 9,10 are of generally U-shape in axial cross-section and are made of elastomeric material such as neoprene or silicone although other cross-sections and/or materials may be used where appropriate.

As will be understood from the foregoing description of an exemplary embodiment, the present invention provides a cable gland for armour cable in which one of the clamping members has two tapered clamping surfaces selectively co-operable with a tapered clamping surface of the other clamping member to vary the size of the annular clearance gap between the clamping members to accommodate different armour thicknesses, and the clamping members are preferably axially adjustable such that different armour thicknesses within specific limits can be accommodated between each pair of opposed tapered clamping surfaces.

Thus, instead of providing accurately sized clamping members for each armour thickness, the same clamping members can be employed for a range of armour thicknesses that are within the range of specific limits for adjustment of the clearance gap. As a result, for a given size of cable gland, the total number of clamping members can be reduced as compared with conventional systems employing accurately sized clamping members.

It will be understood that the invention is not limited to the embodiment above-described and that various modifications are within the scope of the invention. For example, a set of rings having internal clamping surfaces of different sizes may be provided for selective assembly with a common ferrule.

Alternatively, the ring and ferrule may each have a pair of clamping surfaces and be reversible to position selected clamping surfaces opposite each other.

Where one of the ferrule and ring has a single clamping surface, it may be separate from the threadably engaged gland parts or integral with one of them. For example, the ferrule may comprise a cone at the end of the entry adaptor while the ring may comprise an inclined shoulder in the counterbore of the sleeve.

Sets of rings and/or ferrules having clamping surfaces of different sizes may be provided for assembly with common gland parts thereby increasing the range of armour thicknesses that can be accommodated.

## Claims

1. A cable gland (5) for electrical cable (1) comprises a pair of members (11;12) for clamping cable armour (2) between opposed tapered surfaces (23;26a,26b) of the clamping members (11;12), wherein one of the clamping members (12) has first and second tapered surfaces (26a,26b), characterised in that the tapered surface (23) of the other clamping member (11) is co-operable with a selected one of the first and second tapered surfaces (26a,26b) for accommodating different thicknesses of cable armour (2).

2. A cable gland according to Claim 1 characterised in that the first and second tapered surfaces (26a,26b) extend towards opposite ends of said one clamping member (12), and said one clamping member (12) is reversible to present a selected one of the tapered surfaces (26a,26b) for co-operating with the tapered surface (23) of the other member (11).

3. A cable gland according to Claim 1 or Claim 2 characterised in that the clamping members (11,12) are relatively axially adjustable to vary the size of the gap between the opposed tapered surfaces (23,26a;23,26b) within specific limits.

4. A cable gland according to any one of the preceding Claims characterised in that the opposed tapered surfaces (23,26a;23,26b) of the clamping members (11;12) are of complementary shape, for example frusto-conical.

5. A cable gland according to any one of the preceding Claims characterised in that the first and second tapered surfaces (26a,26b) are of different axial length.

6. A cable gland according to any one of the preceding Claims characterised in that the tapered surface (23) of said other member (11) is axially elongated relative to the first and/or second tapered surface (26a,26b) of said one member (12).

7. A cable gland according to any one of the preceding Claims characterised in that the clamping members (11;12) are urged axially to clamp the cable armour (2) between the opposed tapered surfaces (23,26a;23,26b) by relative rotation of two threadably engaged parts (6;7) of the gland (5).

8. A cable gland according to Claim 7 characterised in that at least one clamping member (11;12) is separate from said threadably engaged gland parts (6;7).

9. A cable gland according to any one of the preceding Claims characterised in that the first and second tapered surfaces (26a,26b) are provided by internal surfaces of an annular outer ring (12) and the opposed tapered surface (23) is provided by an external surface of an annular inner cone (11).

10. A cable gland according to Claim 9 characterised in that a set of rings (12) having internal clamping surfaces (26a,26b) of different sizes is provided for selective assembly with a common cone (11).

## Patentansprüche

1. Kabelverschraubung (5) für elektrische Kabel (1), welche ein Paar von Klemmteilen (11, 12) zum Einklemmen des Kabelmantels zwischen einander gegenüberliegenden Schrägflächen (23; 26a, 26b) der Klemmteile (11; 12) aufweist, wobei einer der Klemmteile (12) erste und zweite Schrägflächen (26a, 26b) aufweist, dadurch gekennzeichnet, daß die Schrägfläche (23) des anderen Klemmteiles (11) mit einer ausgewählten der ersten und zweiten Schrägflächen (26a, 26b) zusammenarbeitet, um verschiedene Dicken des Kabelmantels (2) aufzunehmen.

2. Kabelverschraubung nach Anspruch 1, dadurch gekennzeichnet, daß die ersten und zweiten Schrägflächen (26a, 26b) sich in Richtung einander gegenüberliegender Enden des einen Klemmteils (12) erstrecken, und daß der eine Klemmteil (12) umkehrbar ist, um eine ausgewählte der Schrägflächen (26a, 26b) für die Zusammenarbeit mit der Schrägfläche (23) des anderen Klemmteiles (11) darzubieten.

3. Kabelverschraubung nach Anspruch 1 oder 2, dadurch gekennzeichnet, daß die Klemmteile (11, 12) axial relativ verstellbar sind, um die Größe des Spalts zwischen einander gegenüberliegenden Schrägflächen (23, 26a; 23, 26b) in bestimmten Grenzen zu ändern.

4. Kabelverschraubung nach einem der vorstehenden Ansprüche, dadurch gekennzeichnet, daß die einander gegenüberliegenden Schrägflächen (23, 26a; 23, 26b) der Klemmteile (11, 12) komplementär geformt sind, beispielsweise kegelstumpfförmig.

5. Kabelverschraubung nach einem der vorstehenden Ansprüche, dadurch gekennzeichnet, daß die ersten und zweiten Schrägflächen (26a, 26b) unterschiedliche axiale Längen aufweisen.

6. Kabelverschraubung nach einem der vorstehenden Ansprüche, dadurch gekennzeichnet, daß die Schrägfläche (23) des anderen Klemmteils (11) im Vergleich mit der ersten und/oder zweiten Schrägfläche (26a, 26b) des anderen Klemmteils (12) axial verlängert ist.

7. Kabelverschraubung nach einem der vorstehenden Ansprüche, dadurch gekennzeichnet, daß die Klemmteile (11, 12) axial gedrückt werden, um den Kabelmantel (2) zwischen einander gegenüberliegenden Schrägflächen (23, 26a; 23, 26b) durch Relativdrehung von zwei, in gewindemäßigem Eingriff stehenden Teilen (6, 7) der Kabelverschraubung (5) einzuklemmen.

8. Kabelverschraubung nach Anspruch 7, dadurch gekennzeichnet, daß mindestens ein Klemmteil (11, 12) von den in gewindemäßigem Eingriff miteinander stehenden Kabelverschraubungsteilen (6, 7) getrennt ausgebildet ist.

9. Kabelverschraubung nach einem der vorstehenden Ansprüche, dadurch gekennzeichnet, daß die ersten und zweiten Schrägflächen (26a, 26b) durch Innenflächen eines ringförmigen Außenrings (12) gebildet sind, und daß die gegenüberliegende Schrägfläche (23) durch eine Außenfläche eines ringförmigen Innenkonus (11) gebildet ist.

10. Kabelverschraubung nach Anspruch 9, dadurch gekennzeichnet, daß eine Gruppe von Ringen (12) mit inneren Klemmflächen (26a, 26b) unterschiedlichen Größen vorgesehen ist, welche wahlweise auf einen gemeinsamen Konus (11) montierbar sind.

## Revendications

1. Presse-étoupe (5) pour câble électrique (1), qui comprend deux éléments (11; 12) pour bloquer une armature de câble (2) entre des surfaces coniques opposées (23; 26a, 26b) des éléments de blocage (11; 12), presse-étoupe dans lequel l'un des éléments de blocage (12) présente une première et une deuxième surfaces coniques (26a, 26b), caractérisé en ce que la surface (23) de l'autre élément de blocage (11) coopère avec une surface sélectionnée de la première et de la deuxième surfaces coniques (26a, 26b) pour recevoir différentes épaisseurs de l'armature de câble (2).

2. Presse-étoupe de câble selon la revendication 1, caractérisé en ce que la première et la deuxième surfaces coniques (26b, 26b) s'étendent vers des extrémités opposées dudit premier élément de blocage (12), et en ce que ledit premier élément de blocage (12) est réversible en sorte de présenter une surface sélectionnée des surfaces coniques (26a, 26b) pour coopérer avec la surface conique (23) de l'autre élément (11).

3. Presse-étoupe de câble selon la revendication 1 ou 2, caractérisé en ce que les éléments de blocage (11, 12) sont ajustables axialement l'un par rapport à l'autre pour faire varier l'espacement entre les surfaces coniques opposées (23, 26a; 23, 26b) dans des limites spécifiques.

4. Presse-étoupe de câble selon l'une quelconque des revendications précédentes, caractérisé en ce que les surfaces coniques opposées (23, 26a; 23, 26b) des éléments de blocage (11; 12) ont des formes complémentaires, par exemple tronconiques.

5. Presse-étoupe de câble selon l'une quelconque des revendications précédentes, caractérisé en ce que la première et la deuxième surfaces coniques (26a, 26b) ont une longueur axiale différente.

6. Presse-étoupe de câble selon l'une quelconque des revendications précédentes, caractérisé en ce que la surface conique (23) dudit autre élément (11) est allongé axialement par rapport à la première et/ou à la deuxième surface(s) conique(s) (26a, 26b) dudit premier élément (12).

7. Presse-étoupe de câble selon l'une quelconque des revendications précédentes, caractérisé en ce que les éléments de blocage (11; 12) sont pressés axialement pour bloquer l'armature de câble (2) entre les surfaces coniques opposées (23, 26a; 23, 26b) par rotation relative de deux parties (6; 7), engagées par vissage, du presse-étoupe (5).

8. Presse-étoupe de câble selon la revendication 7, caractérisé en ce qu'au moins un élément de blocage (11; 12) est séparé desdites parties (6; 7) du presse-étoupe engagées par vissage.

9. Presse-étoupe de câble selon l'une quelconque des revendications précédentes, caractérisé en ce que la première et le deuxième surfaces coniques (26a, 26b) sont formées par des surfaces internes d'un anneau externe (12) et la surface conique opposée par une surface externe d'un cône annulaire interne (11).

10. Presse-étoupe de câble selon la revendication 9, caractérisé en ce qu'il est prévu une série d'anneaux (12) ayant des surfaces de blocage internes (26a, 26b) de différentes dimensions pour un assemblage sélectif avec un cône commun (11).
